# EUROPÄISCHE PATENTSCHRIFT

(11) **EP 2 545 982 B1**
(45) Veröffentlichungstag und Bekanntmachung des Hinweises auf die Patenterteilung: **09.09.2020**
(21) Anmeldenummer: 12175526.8
(22) Anmeldetag: 09.07.2012
(51) Int. Cl.: B01D 53/86, B01D 53/94, B01J 23/30, B01J 23/42, B01J 23/44, B01J 23/652, B01J 37/00, B01J 37/02, B01J 35/10

(54) **VERWENDUNG EINES KATALYSATORS MIT ERHÖHTER WASSERDAMPF- UND STAUBBESTÄNDIGKEIT ZUR REINIGUNG VON ABGASEN AUS DER ZEMENTINDUSTRIE**
USE OF A CATALYST WITH INCREASED WATER VAPOUR AND DUST RESISTANCE FOR PURIFICATION OF EXHAUST GASES FROM THE CEMENT INDUSTRY
UTILISATION D'UN CATALYSEUR AVEC UNE PLUS GRANDE RÉSISTANCE À LA VAPEUR D'EAU ET À LA POUSSIÈRE POUR LA PURIFICATION DES GAZ D'ÉCHAPPEMENT DE L'INDUSTRIE DU CIMENT

(30) Priorität: 14.07.2011 DE 102011107335
(43) Veröffentlichungstag der Anmeldung: 16.01.2013
(73) Patentinhaber: Clariant Produkte (Deutschland) GmbH, 65929 Frankfurt am Main (DE)
(72) Erfinder: KLOSE, Dr. Frank, 83026 Rosenheim (DE); TIßLER, Arno, 93105 Tegernheim (DE); PODEHL, Sascha, 83088 Kiefersfelden (DE); STEIN, Andane, 83043 Bad Aibling (DE); BÜTTNER, Olaf, 83059 Kolbermoor (DE)
(74) Vertreter: Clariant Produkte (Deutschland) GmbH

(56) Entgegenhaltungen:
- WO-A1-2010/086148
- JP-A- 2011 063 949
- US-A- 5 849 256
- US-A- 6 051 198
- US-A1- 2004 116 285
- US-A1- 2007 209 350
- US-A1- 2008 213 145
- US-A1- 2010 130 348
- US-A1- 2010 221 556
- US-B1- 6 641 785

## Beschreibung

Die vorliegende Erfindung betrifft die Verwendung eines Katalysators zur Entfernung von Kohlenmonoxid (CO) und Kohlenwasserstoffen aus Abgasströmen der Zementindustrie, welche Wasserdampf und mineralischen Staub enthalten.

Verbrennungsgase aus industriellen Anwendungen und stationären Motoren enthalten gewöhnlich Kohlenmonoxid und organische Reststoffe, nämlich Kohlenwasserstoffverbindungen, die nicht in die Umwelt emittiert werden sollen. In zahlreichen Ländern existieren hierzu Emissionsgrenzwerte bzw. sind entsprechende Vorschriften im Entstehen. Um diese Vorschriften einzuhalten, bedarf es geeigneter Abgasnachbehandlungsverfahren. Zu diesen Verfahren gehört auch die auf der Oxidationskatalyse beruhende katalytische Abluftreinigung, die an sich Stand der Technik ist.

US 6,051,198 offenbart einen Katalysator, der zur Aufreinigung von Ausgasungsabgasen geeignet ist und der als Katalysatorkomponente A, ein Metalloxid umfassend mindestens ein, oder ein Mischoxid umfassend mindestens zwei oder mehr, Metall(e), ausgewählt aus der Gruppe bestehend aus Ti, Si und Zr; und als eine Katalysatorkomponente B ein Oxid enthaltend mindestens eines ausgewählt aus der Gruppe bestehend aus V, Cu, W und Cr welches einen mittleren Porendurchmesser im Bereich von 0,010 bis 0,070 pm, ein Gesamtmikroporenvolumen im Bereich von 0,30 bis 0,60 ml/g und eine spezifische Oberfläche im Bereich von 50 bis 200 m²/g aufweist, umfasst. Die Verwendung dieses Katalysators ermöglicht eine ökonomische und effiziente Aufreinigung von Ausgasungsabgasen.

US 2007/0209350 A1 offenbart ein Verfahren zur Reinigung von Abgasen aus Verbrennungsmotoren, die organische Kohlenwasserstoffe, Rußpartikel, Kohlenmonoxid und Schwefeldioxid enthalten. Das Verfahren umfasst die Schritte des Oxidierens von Kohlenwasserstoffen und Teilen der Rußpartikel, in einem ersten Reaktor in der Anwesenheit eines ersten Katalysators, der aktiv in der Oxidation von Kohlenwasserstoffen und Rußpartikeln ist, ohne Schwefeldioxid zu oxidieren, und des Bildens eines teilweise gereinigten Abgasstroms, des Kühlens des teilweise gereinigten Abgasstroms und Umsetzen des Kohlenmonoxids des teilweise gereinigten Abgasstroms in einem zweiten Reaktor in der Anwesenheit eines zweiten Katalysators, der in der Oxidation von Kohlenmonoxid aktiv ist, ohne Schwefeldioxid zu oxidieren, und des Ausscheidens des gereinigten Abgasstroms.

US 6,641,785 B1 betrifft einen katalytischen Konverter und ein Verfahren zur Reinigung des Abgases aus einem internen Verbrennungsmotor, der mit einem Überschuss an Luft betrieben wird. Der katalytische Konverter hat ein aktives Material, das aus den Oxiden TiO₂, V₂O₅, CaO und SiO₂, sowie WO₃ und/oder MoO₃ gemacht ist. Ein aktives Material dieses Typs kann für die SCR-Methode verwendet werden, um zu gleichen Teilen die Stickoxide und Kohlenwasserstoffe zu reduzieren. Die CO-Oxidationsaktivität eines Materials dieses Typs kann durch die Zudosierung von Elementen ausgewählt aus der Gruppe bestehend aus Pt, Pd, Rh, Ru und Ir in einer beliebigen anorganischen Form, erhöht werden.

US 2004/0116285 A1 beschreibt einen katalytisch wirksamen Dieselpartikel-Abgasfilter mit verbesserter Dieselpartikel-Oxidationsaktivität und thermischer Stabilität einschließlich eines porösen Filtersubstrat zur Filtration des Dieselpartikelmaterials, beschichtet mit einem Aluminiumoxid-, Titandioxid-, Siliziumdioxid- und Zirkonoxid-Trägermaterial mit hoher Oberfläche, mit einem Promotor ausgewählt aus Cer, Lanthanoxid, Wolframoxid, Molybdänoxid und Zinnoxid, für katalytisch aktive Materialien, welche ein Alkalimetall-Vanadat und ein Edelmetall beinhalten.

Oft enthalten die zu reinigenden Gase jedoch nicht nur Kohlenmonoxid und organische Reststoffe wie Kohlenwasserstoffverbindungen, sondern auch größere Mengen Wasserdampf und mineralischen Staub. Bei OxidationsKatalysatoren nach dem Stand der Technik verdrängt Wasserdampf dabei andere Moleküle von der Katalysatoroberfläche, sodass die Performance durch chemische Inhibierung absinkt. Zusätzlich kann sich durch Kapillarkondensation bei Temperaturen unterhalb von 300 °C ein Wasserfilm auf der Katalysatoroberfläche herausbilden, der den Zugang der Schadstoffmoleküle und des zu ihrer Oxidation benötigten Sauerstoffs zu den aktiven Zentren des Katalysators physikalisch blockiert bis hin zu einem vollständigen Aktivitätsverlust.

Mineralische Staubablagerungen entstehen auf Katalysatoren durch die Abscheidung von anorganischen Partikeln, die aus Aschen vorgelagerter Verbrennungsprozesse sowie anderen vorgelagerten Prozessen entstammen, aus dem passierenden Gasstrom auf der Katalysatoroberfläche. Da letztere eine gewisse Rauigkeit aufweist, bleiben die abgeschiedenen Partikel insbesondere bei hoher Gasfeuchte durch Adhäsionskräfte gut haften. Solange die mineralische Staubschicht gasdurchlässig bleibt, sind nur geringe Performanceverluste zu beobachten. Besteht der Staub jedoch aus feinen Partikeln mit Durchmessern von 0,1 µm bis 10 µm, wie beispielsweise Gipsstaub, so entsteht eine relativ kompakte Staubschicht mit geringer Gasdurchlässigkeit. Dies kann einen kompletten Aktivitätsverlust der Katalysatoren zur Folge haben. Zwar ist es prinzipiell möglich, diesen mineralischen Feinstaub abzureinigen, jedoch müssen hierzu oft die vorgeschalteten Anlagen abgeschaltet werden, um den Katalysator abzukühlen. Die damit verbundenen Stillstandzeiten sind jedoch teuer und für Anlagenbetreiber nicht akzeptabel. Daher haben sich in bestimmten Branchen wie beispielweise der Zementindustrie bislang keine Oxidationskatalysatoren zur Entfernung von Kohlenmonoxid und organischen Reststoffen durchsetzen können. Hier gelten die entsprechenden Emissionen derzeit noch als unvermeidbar.

Ziel der Erfindung war es daher, die Verwendung eines Katalysators, bereitzustellen, um staub- und wasserdampfhaltige Abgase der Zementindustrie effektiver von Kohlenmonoxid und organischen Reststoffen befreien zu können. Damit sollte es nun auch möglich sein, in der Zementindustrie Katalysatoren zur Entfernung von Kohlenmonoxid und organischen Reststoffen, wie Kohlenwasserstoffverbindungen, einsetzen zu können.

Die vorliegende Erfindung stellt hierfür die erfindungsgemäße Verwendung eines Katalysators, umfassend Pd und/oder Pt und Oxide des Si, Ti und W, worin der Katalysator entweder in Form eines Extrudats aus Oxiden des Si, Ti und W vorliegt, das mit Pd und/oder Pt imprägniert ist, oder in Form eines geträgerten Katalysators vorliegt, bei dem auf einen Trägerkörper eine Schicht aufgebracht ist, die das Pd und/oder Pt und die Oxide des Si, Ti und W umfasst, zur Entfernung von Kohlenmonoxid (CO) und Kohlenwasserstoffen aus Abgasströmen der Zementindustrie, welche Wasserdampf und mineralischen Staub enthalten, bereit.

Ist der Katalysator ein Extrudat, so besteht dessen Matrix vorzugsweise aus Oxiden des Si, Ti und W. Unter der Matrix des Extrudats versteht man den formgebenden Teil des Extrudats. Vorzugsweise ist die äußere Schicht des Extrudats mit Pd und/oder Pt imprägniert.

Unter einem geträgerten Katalysator versteht man gemäß der vorliegenden Erfindung, dass auf einen Trägerkörper eine Beschichtung aufgebracht wurde, die die katalytisch aktiven Komponenten des Katalysators enthält. Die Matrix der aufgebrachten Beschichtung besteht hierbei vorzugsweise aus Oxiden des Si, Ti oder W. Zusätzlich weist die aus der Beschichtung bestehende Schicht Pd und/oder Pt auf.

Als Trägerkörper kann ein metallischer oder keramischer Monolith, ein Fließ- oder ein Metallschaum verwendet werden. Auch andere im Stand der Technik bekannte Formkörper bzw. Trägerkörper sind geeignet. Besonders bevorzugt ist ein metallischer oder keramischer Monolith, der eine Vielzahl von parallelen Durchtrittsöffnungen aufweist, die mit einer Beschichtungszusammensetzung versehen werden. Damit kann ein gleichmäßiger und insbesondere dünner Auftrag der Beschichtungszusammensetzung sichergestellt werden, so dass bei der Kalzinierung die Wärmezufuhr in allen Bereichen der Schicht ausreichend ist.

Besonders bevorzugt weist der Trägerkörper die Form eines Wabenkörpers auf. Insbesondere sind metallische Wabenkörper geeignet, die häufig aus Metallblechen oder Metallfolien gebildet werden. Dabei werden die Wabenkörper beispielsweise durch abwechselnde Anordnung von Lagen strukturierter Bleche bzw. Folien hergestellt. Vorzugsweise bestehen diese Anordnungen dabei aus einer Lage eines glatten Blechs im Wechsel mit einem gewellten Blech, wobei die Wellung beispielsweise sinusförmig, trapezförmig, omegaförmig oder zickzackförmig ausgebildet sein kann. Entsprechende metallische Wabenkörper und Verfahren zu ihrer Herstellung werden beispielsweise in der EP 0 049 489 A1 oder der DE 2856030 A1 beschrieben.

Im Bereich der Trägerkörper haben metallische Wabenkörper den Vorteil, dass sie sich schneller erwärmen und damit in der Regel Katalysatorträgerkörper auf der Basis von metallischen Substraten ein besseres Ansprechverhalten bei Kaltstartbedingungen einer Verbrennungsanlage zeigen.

Vorzugsweise weist der Wabenkörper eine Zelldichte von 30 cpsi bis 1.500 cpsi, besonders bevorzugt 100 cpsi bis 600 cpsi, insbesondere 200 cpsi bis 450 cpsi auf.

Der Trägerkörper, auf den die äußere Schicht des Katalysators aufgebracht sein kann, kann aus einem beliebigen Metall oder einer Metalllegierung gebildet und z.B. durch Extrusion oder durch Aufwickeln oder Stapeln oder Falten von Metallfolien hergestellt sein. Bekannt im Bereich der Abgasreinigung sind temperaturbeständige Legierungen mit den Hauptbestandteilen Eisen, Chrom und Aluminium. Bevorzugt für den Katalysator sind frei durchströmbare monolithische Trägerkörper mit oder ohne innere Anströmkanten zur Abgasverwirbelung, oder Metallschäume, die eine große innere Oberfläche aufweisen und an denen der Katalysator sehr gut haftet. Jedoch lassen sich auch Trägerkörper mit Schlitzen, Lochungen, Perforationen und Prägungen in der Metallfolie einsetzen.

In gleicher Weise können Trägerkörper aus keramischem Material eingesetzt werden. Bevorzugt handelt es sich bei dem keramischen Material um ein inertes, niedrig-oberflächiges Material wie Cordierit, Aluminiumtitanat, Mullit oder α-Aluminiumoxid. Jedoch kann der verwendete Trägerkörper auch aus hoch-oberflächigem Trägermaterial wie γ-Aluminiumoxid bestehen.

Ebenso kann ein Metallschaum, beispielsweise ein metallisches offenporiges Schaummaterial, als Trägerkörper eingesetzt werden. Im Rahmen der vorliegenden Erfindung soll unter dem Begriff "metallisches offenporiges Schaummaterial" ein Schaummaterial aus einem beliebigen Metall oder aus einer beliebigen Legierung verstanden werden, das gegebenenfalls auch noch Zuschlagsstoffe enthalten kann und das eine Vielzahl von Poren aufweist, die miteinander leitungsverbunden sind, sodass beispielsweise durch das Schaummaterial ein Gas hindurch geleitet werden kann.

Metallische, offenporige Schaummaterialien haben bedingt durch die Poren und Hohlräume eine sehr geringe Dichte, weisen jedoch eine beträchtliche Steifigkeit und Festigkeit auf. Die Herstellung von Metallschäumen erfolgt beispielsweise mittels eines Metallpulvers und eines Metallhydrids. Beide Pulver werden in der Regel miteinander vermischt und dann durch Heißpressen oder Strangpressen zu einem Formmaterial verdichtet. Das Formmaterial wird dann auf eine Temperatur oberhalb des Schmelzpunktes der Metalle erhitzt. Dabei setzt das Metallhydrid Wasserstoffgas frei und schäumt das Gemenge auf.

Es gibt jedoch auch noch andere Möglichkeiten, Metallschäume herzustellen, beispielsweise durch Einblasen von Gas in eine Metallschmelze, die zuvor durch Zugabe fester Bestandteile schäumbar gemacht wurde. Für Aluminiumlegierungen werden beispielsweise zur Stabilisierung 10 bis 20 Vol.-% Siliziumcarbid oder Aluminiumoxid zugegeben. Darüber hinaus lassen sich offenporige metallische Schaumstrukturen mit einem Porendurchmesser von 10 ppi bis ca. 50 ppi durch spezielle Feingusstechniken herstellen.

Erfindungsgemäß soll unter "Oxiden des Si, Ti und W" sowohl ein Kompositoxid aus diesen Oxiden als auch ein Mischoxid aus diesen Oxiden verstanden werden. Insbesondere ist unter "Oxiden des Si, Ti und W" ein Mischoxid aus wolframstabilisiertem Anatas (TiO₂) und SiO₂ zu verstehen. Es kann aber auch ein Mischoxid aus wolframstabilisiertem Anatas (TiO₂) und SiO₂ verstanden werden
Die Beladung des Trägerkörpers mit der Beschichtung, die Pd und/oder Pt und Oxide des Si, Ti und W enthält bzw. vorzugsweise daraus besteht, liegt vorzugsweise im Bereich von 10-1000 g Beschichtung/l Wabenvolumen, bevorzugt 10-500 g Beschichtung/l Wabenvolumen und besonders bevorzugt 10-200 g Beschichtung/l Wabenvolumen.

Die auf dem Trägerkörper befindliche äußere Schicht bzw. das Extrudat des Katalysators liegt vorzugsweise mit Pd und/oder Pt imprägniert vor. Hierbei liegen das Pd und/oder das Pt vorzugsweise hochdispers in metallischer und/oder oxidischer Form mit Kristallitgrößen < 5 nm (XRDamorph) vorzugsweise auf der Oberfläche oder in vorhandenen Poren der Oxidschicht vor.

Es ist erfindungsgemäß besonders bevorzugt, dass die Oxidschicht des Trägerkörpers bzw. das Extrudat sowohl mit Pd als auch mit Pt imprägniert ist.

Hierbei liegt das Verhältnis von Pd/Pt vorzugsweise im Bereich von 1:10 bis 10:1, besonders bevorzugt 1:7 bis 7:1 und weiter bevorzugt 5:1 bis 1:5 vor.

Liegt der Katalysator in Form eines Extrudats aus Oxiden des Si, Ti und W vor, das mit Pd und/oder Pt imprägniert ist, dann liegt der Anteil an Pd und/oder Pt vorzugsweise im Bereich von 0,01 bis 10 Gew.-%, stärker bevorzugt 0,01 bis 5 Gew.-%, noch stärker bevorzugt 0,01 bis 3 Gew.-% und am stärksten bevorzugt 0,02 bis 0,5 Gew.-%, bezogen auf das Gesamtgewicht des Katalysators.

Liegt der Katalysator in Form eines geträgerten Katalysators vor, bei dem auf einen Trägerkörper eine Schicht aufgebracht ist, die das Pd und/oder Pt und die Oxide des Si, Ti und W umfasst, so liegt der Anteil an Pd und/oder Pt vorzugsweise im Bereich von 0,01 bis 20 Gew.-%, stärker bevorzugt 0,01 bis 10 Gew.-%, noch stärker bevorzugt 0,02 bis 5 Gew.-% und am stärksten bevorzugt 0,02 bis 1 Gew.-%, bezogen auf die Gesamtmasse der Schicht. Für den Fall, dass der Trägerkörper eine Wabenform aufweist, liegt die typische Beladung an Edelmetall vorzugsweise im Bereich von 0,2 bis 5 g/L.

Der Anteil an Ti (bezogen auf TiO₂) in der Oxidschicht des Katalysators liegt vorzugsweise im Bereich von 70 bis 95, stärker bevorzugt von 75 bis 90 und am stärksten bevorzugt von 77 bis 85 Gew.-% bezogen auf das Gesamtgewicht der Oxide des Si, Ti und W.

Der Anteil an Si (bezogen auf SiO₂) in der Oxidschicht des Katalysators liegt vorzugsweise im Bereich von 4 bis 20 Gew.-%, stärker bevorzugt 8 bis 17 Gew.-% und am stärksten bevorzugt 10 bis 15 Gew.-% bezogen auf das Gesamtgewicht der Oxide des Si, Ti und W.

Der Anteil von W (bezogen auf WO₃) in der Oxidschicht des Katalysators liegt vorzugsweise im Bereich von 1 bis 15 Gew.-%, stärker bevorzugt 4 bis 13 Gew.-% und am stärksten bevorzugt 6 bis 10 Gew.-%, bezogen auf das Gesamtgewicht der Oxide des Si, Ti und W.

Es ist erfindungsgemäß besonders bevorzugt, dass die Summe der Anteile des Pd und/oder Pt und der Oxide des Si, Ti und W im Bereich von 95 bis 100 Gew.-% liegt, bezogen auf das Gesamtgewicht der Schicht des geträgerten Katalysators oder bezogen auf das Gesamtgewicht des Extrudats.

Weiterhin ist es möglich, dass der Katalysator neben Pd und/oder Pt noch weitere Metalle enthält. So kommen beispielsweise alle weiteren Edelmetalle der VIII. Nebengruppe sowie Cu, Ag und Au in betracht. Es ist jedoch in einer Ausführungsform besonders bevorzugt, dass neben Pd und/oder Pt keine weiteren katalytisch aktiven Metalle in oder auf der Schicht des Katalysators vorliegen.

Es ist besonders bevorzugt, dass der Katalysator kein Vanadium, insbesondere V₂O₅, als Aktivkomponente umfasst, da Vanadium bzw. Vanadiumoxid Edelmetall-haltige Katalysatoren vergiftet.

Neben der Oxidschicht, die mit Pd und/oder Pt imprägniert ist, enthält der Katalysator vorzugsweise keine weiteren Schalen oder Schichten.

Insbesondere bevorzugt ist es, dass der geträgerte Katalysator in der gesamten Schicht der Oxide des Si, Ti und W mit Pd und/oder Pt imprägniert wird und nicht nur eine Teilkomponente dieser Oxidschicht mit Pt bzw. Pd imprägniert vorliegt. Insbesondere bevorzugt ist es in diesem Zusammenhang, dass die Oxidschicht ein Mischoxid darstellt.

Der Katalysator kann auch durch eine Zusammensetzung hergestellt werden, die zum Einen verwendet werden kann, um ein Vollextrudat-Katalysator herzustellen, und zum anderen als Washcoat verwendet werden kann, um eine Oxidschicht enthaltend Si, Ti und W auf einen Trägerkörper aufzubringen. Im zuletzt genannten Fall ist die Zusammensetzung als Beschichtungszusammensetzung anzusehen. Mit anderen Worten wird die Zusammensetzung verwendet, um den in dieser Erfindung verwendeten Katalysator herzustellen. Die Zusammensetzung umfasst vorzugsweise SiO₂, TiO₂, WO₃, ein Lösungsmittel und mindestens ein Bindemittel. Das Bindemittel umfasst vorzugsweise eine Si-haltige und/oder Titan-haltige Verbindung. Besonders bevorzugt ist es, dass das Bindemittel eine Si-haltige und Titan-haltige Verbindung umfasst.

Die Si-haltige Verbindung ist vorzugsweise ein Silan, insbesondere ein kohlenwasserstoffhaltiges Silan. Insbesondere bevorzugt sind hier die folgenden Silane: 3-Glycid-Oxidpropyl-triethoxysilan (beispielsweise Geniosil GF82 von Wacker Chemie) und Di-tert-butoxy-diacetoxy-silan (beispielsweise DAS von ABCR Dr. Braunagel GmbH & Co. KG, Karlsruhe).

Die Ti-haltige Verbindung ist vorzugsweise eine ein- oder mehrkernige Ti⁴⁺-Koordinationsverbindung. Unter einer Koordinationsverbindung versteht man einen Metall-Ligand-Komplex. Bei dem Ligand-Metall-Komplex liegt vorzugsweise das Titan als Zentralmetall vor. Es kann vierfach oder sechsfach koordiniert sein, insbesondere ist es jedoch in der vorliegenden Erfindung eine sechsfach koordinierte Ti⁴⁺-Koordinationsverbindung. Als Liganden kommen Ammoniak, OH⁻, H₂O und zweizähnige Liganden, wie beispielsweise Lactat in Betracht. Insbesondere bevorzugt ist es, dass die Ti-haltige Verbindung Dihydroxy-bis-ammonium-lactato-titan (beispielsweise TYZOR LA von Lehmann & Voss & Co. KG) ist. Als Lösungsmittel für die Zusammensetzung kommen die folgenden in Betracht: Wasser, niedermolekulare Alkohole wie Methanol, Ethanol und Propanol, Ketone wie Aceton sowie niedermolekulare Karbonsäuren. Insbesondere bevorzugt wird als Lösungsmittel Wasser verwendet. Es können auch Mischungen jeglicher Zusammensetzung der vorgenannten Lösungsmittel verwendet werden.

Der Anteil an TiO₂ in der Zusammensetzung liegt vorzugsweise im Bereich von 60 bis 90, stärker bevorzugt von 65 bis 85 und am stärksten bevorzugt von 70 bis 80 Gew.-%, bezogen auf das Gesamtgewicht der Zusammensetzung ohne Lösungsmittel.

Der Anteil an SiO₂ in der Zusammensetzung liegt vorzugsweise im Bereich von 5 bis 20 Gew.-%, stärker bevorzugt 8 bis 17 Gew.-% und am stärksten bevorzugt 10 bis 15 Gew.-%, bezogen auf das Gesamtgewicht der Zusammensetzung ohne Lösungsmittel.

Der Anteil an WO₃ in der Zusammensetzung liegt vorzugsweise im Bereich von 1 bis 20 Gew.-%, stärker bevorzugt 4 bis 13 Gew.-% und am stärksten bevorzugt 6 bis 10 Gew.-%, bezogen auf das Gesamtgewicht der Zusammensetzung ohne Lösungsmittel.

Der Anteil der Si-haltigen Verbindung in der Zusammensetzung liegt vorzugsweise im Bereich von 0 bis 5 Gew.-% und stärker bevorzugt von 1 bis 3 Gew.-%, bezogen auf das Gesamtgewicht der Zusammensetzung ohne Lösungsmittel.

Der Anteil der Ti-haltigen Verbindung in der Zusammensetzung liegt vorzugsweise im Bereich von 0 bis 15 Gew.-%, stärker bevorzugt von 1 bis 13 Gew.-% und am stärksten bevorzugt von 5 bis 10 Gew.-% bezogen auf das Gesamtgewicht der Zusammensetzung ohne Lösungsmittel.

Das Gewichtsverhältnis der Summe aller festen Komponenten in der Zusammensetzung zu dem Lösungsmittel beträgt 2/1 bis 1/4, vorzugsweise 1/1 bis 1/3 und besonders bevorzugt 1/1,5 bis 1/2,5.

Die Zusammensetzung wird vorzugsweise hergestellt, indem zu einer kolloidalen SiO₂-Suspension eine Mischung aus TiO₂ und WO₃ zugegeben wird. Durch Zugabe von Wasser und Rühren wird daraus eine Dispersion hergestellt. Zu dieser Dispersion wird nach etwa 5 bis 20 Minuten Rühren vorzugsweise das bzw. die Bindemittel gegeben. Anschließend wird die Mischung vorzugsweise in einer geeigneten Mühle durchgemahlen.

Im Falle eines geträgerten Katalysators wird die Zusammensetzung vorzugsweise verwendet, um die Oberfläche eines Trägerkörpers zu beschichten. Dabei kann die Beschichtungszusammensetzung bereits eine Pd-haltige Vorläuferverbindung und/oder eine Pt-haltige Vorläuferverbindung enthalten. Enthält die Beschichtungszusammensetzung bereits die Pd-haltige Vorläuferverbindung und/oder die Pt-haltige Vorläuferverbindung so muss diese später nicht mehr in die Schicht imprägniert werden. In diesem Fall liegt die Pd-haltige Vorläuferverbindung und/oder eine Pt-haltige Vorläuferverbindung vorzugsweise ein einem Anteil im Bereich von 0,1 bis 15 Gew.-%, bevorzugt 0,2 bis 10 Gew.- % und besonders bevorzugt 0,5 bis 8 Gew.-% vor, bezogen auf das Gesamtgewicht der Beschichtungszusammensetzung ohne Lösungsmittel. Enthält die Beschichtungszusammensetzung die Pd-haltige Vorläuferverbindung und/oder eine Pt-haltige Vorläuferverbindung nicht, wird diese vorzugsweise später in die Schicht imprägniert.

Wird aus der Zusammensetzung eine Katalysator in Form eines Vollextrudats hergestellt, dann wird die Zusammensetzung vorzugsweise ohne die Pd-haltige Vorläuferverbindung und/oder eine Pt-haltige Vorläuferverbindung verwendet. Auf diese Weise bilden Oxide des Si, Ti und W und optional die aus den Bindemittel erhaltenen Bestandteile die Matrix des Vollextrudats. Zur Herstellung des Katalysators in Form eines Vollextrudats wird dann anschließend die Pd-haltige Vorläuferverbindung und/oder Pt-haltige Vorläuferverbindung imprägniert.

Das Formen der Zusammensetzung zu einem Vollextrudat kann prinzipiell nach allen dem Fachmann bekannten Verfahren durchgeführt werden. Besonders bevorzugt ist es, wenn dieses Formen mit den folgenden Geräten bzw. Maschinen durchgeführt wird: Strangpressen, Einschneckenextruder, Doppelschneckenextruder (gleichläufig od. gegenläufig), Vielwellenextruder, Kaskadenextruder oder Planetenextruder.

Das Vollextrudat kann die gleichen Formen und geometrischen Abmessungen aufweisen wie weiter oben für den Katalysatorträgerkörper definiert. Besonders bevorzugt liegt das Vollextrudat in Form einer Wabe oder von strangförmigen Partikeln vor. Ferner kann es bevorzugt sein, die Zusammensetzung zu Granulaten oder Tabletten weiter zu verarbeiten, wo auch hier die dem Fachmann bekannten Verfahren zum Einsatz kommen.

Wird ein geträgerter Katalysator hergestellt, dann erfolgt das Aufbringen der äußeren Schicht der Beschichtungszusammensetzung auf einen Trägerkörper vorzugsweise indem ein Trägerkörper in die Beschichtungszusammensetzung getaucht und wieder entnommen wird. Der in die Beschichtungssuspension eingetauchte Trägerkörper wird vorzugsweise nach dem Abtropfen mit Druckluft ausgeblasen. Anschließend wird der beschichtete Trägerkörper bei einer Temperatur im Bereich von 60 bis 200°C, stärker bevorzugt im Bereich von 80 bis 180°C und am meisten bevorzugt im Bereich von 100 bis 160°C getrocknet. Die Trockenzeit beträgt hier 0,5 bis 5 Stunden, besonders bevorzugt 1 bis 4 Stunden und am meisten bevorzugt 1,5 bis 3,5 Stunden. Anschließend wird der getrocknete beschichtete Trägerkörper kalziniert. Auf diese Weise wird ein Katalysatorvorläufer erhalten, der auf einem Trägerkörper eine Schicht von Oxiden des Si, Ti und W enthält. Es ist besonders von Vorteil, wenn die Oxidschicht als eine dünne Schicht bzw. fein verteilt auf dem Trägerkörper vorliegt. Dadurch kann eine optimale Angriffsmöglichkeit für die thermische Energie beim Kalzinieren gewährleistet werden. Die Kalziniertemperatur befindet sich vorzugsweise im Bereich von 400 bis 700 °C, stärker bevorzugt 450 bis 650 °C und stärksten bevorzugt im Bereich von 500 bis 600 °C. Das Kalzinieren wird vorzugsweise 1 bis 10 Stunden, stärker bevorzugt 2 bis 8 Stunden und am stärksten bevorzugt ca. 3 bis 5 Stunden durchgeführt. Enthält die Beschichtungszusammensetzung bereits beim Aufbringen die Pd-haltige Vorläuferverbindung und/oder die Pt-haltige Vorläuferverbindung, so muss keine weitere Imprägnierung mit der Pd-haltige Vorläuferverbindung und/oder die Pt-haltige Vorläuferverbindung erfolgen.

Enthält die Zusammensetzung die Pd-haltige Vorläuferverbindung und/oder die Pt-haltige Vorläuferverbindung beim Aufbringen auf den Trägerkörper nicht, oder ist der Katalysator in der Form eines Vollextrudats, wird das Palladium bzw. Platin vorzugsweise erst nach der Trocknung oder Kalzinierung des Trägerkörpers oder des Vollextrudats aufgebracht, indem eine Pd-haltige Vorläuferverbindung und/oder eine Pt-haltige Vorläuferverbindung auf die Oxidschicht des Trägerkörpers oder auf das Vollextrudat aufgebracht wird.

Möglichkeiten des Aufbringens der Metall-haltigen Vorläuferverbindungen auf die Oxidschicht oder das Vollextrudat sind dem Fachmann auf dem Gebiet der Katalysatortechnik bekannt und können ohne Einschränkung durchgeführt werden. Als Möglichkeiten kommen hier das Tauchverfahren, die Incipient-Wetness Methode oder das Aufbringen in einem Fließbett oder in einer Wirbelschicht, insbesondere in einem Innojet Aircoater in Betracht. Dafür wird vorzugsweise eine Lösung der Vorläuferverbindung(en) in einem Lösungsmittel hergestellt.

Als Lösungsmittel für die Metall-haltigen Vorläuferverbindungen sind reine Lösungsmittel und Lösungsmittelgemische geeignet, in denen die ausgewählte Metallverbindung löslich ist und die nach dem Auftrag auf den Trägerkörper von demselben leicht mittels Trocknung wieder entfernt werden können. Bevorzugte Lösungsmittel sind unsubstituierte Karbonsäuren, insbesondere Essigsäure, Ketone, wie Aceton, und insbesondere Wasser. Es kann dabei von Vorteil sein, die edelmetallhaltige Lösung anzusäuern oder durch Zugabe von Komplexbildnern zu stabilisieren, um eine Ausfällung von Edelmetalloxiden und -hydroxiden zu vermeiden.

Wird ein Katalysator hergestellt, der Pd und Pt bzw. optional eines oder mehrere der oben genannten weiteren Metalle enthält, und werden die Vorläuferverbindungen erst nach der Kalzinierung des mit der Oxidschicht versehenen Trägerkörpers oder des Vollextrudats aufgebracht, so gibt es die folgenden Möglichkeiten: (i) alle Vorläuferverbindungen werden aus einer Lösung in einem Schritt aufgebracht; (ii) die Vorläuferverbindungen werden sequentiell aus verschiedenen Lösungen auf den Trägerkörper oder das Vollextrudat aufgebracht, wobei zwischen den Schritten des Aufbringens der Lösungen optional ein Trockenschritt oder ein Kalzinierschritt eingebaut sein kann.

Die Pd-haltige Vorläuferverbindung oder Pt-haltige Vorläuferverbindung ist vorzugsweise eine wasserlösliche Verbindung.

Die Pd- bzw. Pt-haltigen Vorläuferverbindungen werden vorzugsweise ausgewählt aus: Nitrat-Verbindungen, Acetat-Verbindungen, Tetraammin-Verbindungen, Diammin-Verbindungen, Hydrogencarbonat-Verbindungen und hydroxidischen Metallat-Verbindungen.

Beispiele für bevorzugte Pd-haltige Vorläuferverbindungen sind wasserlösliche Pd-Salze. Es ist bevorzugt, die Pd-Vorläuferverbindung aus der Gruppe bestehend aus Pd(NH₃)₄(HCO₃)₂, Pd(NH₃)₄(HPO₄), Ammonium-Pd-Oxalat, Pd-Oxalat, K₂Pd(Oxalat)₂, Pd(II)-Trifluoracetat, Pd(NH₃)₄(OH)₂, Pd(NO₃)₂, H₂Pd(OAc)₂(OH)₂, Pd(NH₃)₂(NO₂)₂, Pd(NH₃)₄(NO₃)₂, H₂Pd(NO₂)₄, Na₂Pd(NO₂)₄, Pd(OAc)₂ sowie frisch ausgefälltes Pd(OH)₂ auszuwählen. Die Herstellung von frisch ausgefällten Pd (OH)₂ wird vorzugsweise folgendermaßen durchgeführt: Hierbei wird vorzugsweise eine 0,1 bis 40 Gew.-% wässrige Lösung aus Tetrachloropalladat hergestellt. Dann wird zu dieser Lösung eine Base, vorzugsweise eine wässrige Lösung aus Kaliumhydroxid hinzugegeben, bis ein brauner Feststoff, nämlich das Pd(OH)₂ ausfällt. Zur Herstellung einer Lösung zum Auftragen auf den Katalysatorträger wird das frisch ausgefällte Pd(OH)₂ isoliert, gewaschen und in einer wässrig alkalischen Lösung gelöst. Das Lösen erfolgt vorzugsweise bei einer Temperatur im Bereich von 4 bis 40 °C, besonders bevorzugt 15 bis 25 °C. Eine tiefere Temperatur ist aufgrund des Gefrierpunktes des Wassers nicht möglich, eine höhere Temperatur bringt den Nachteil mit sich, dass das Pd(OH)₂ sich in der wässrigen Lösung nach einer bestimmten Zeit wieder niederschlägt und nicht in Lösung geht.

Beispiele für bevorzugte Pt-haltige Vorläuferverbindungen sind wasserlösliche Pt-Salze. Gemäß einer besonders bevorzugten Ausführungsform ist die Pt-Vorläuferverbindung ausgewählt aus der Gruppe bestehend aus Pt (NH₃)₄OH)₂, Pt(NO₃)₂, K₂Pt(OAc)₂, (OH)₂, Pt(NH₃)₂(NO₂)₂, H₂Pt(OH)₆, Na₂Pt(OH)₆, K₂Pt(OH)₆, K₂Pt(NO₂)₄, Na₂Pt(NO₂)₄, Pt(OAc)₂, Pt(NH₃)₄(HCO₃)₂, Pt (NH₃)₄(HPO₄), Pt(NH₃)₄(NO₃)₂ sowie Carboxylate des Platins, vorzugsweise die Salze der aliphatischen Monocarbonsäuren mit 3 bis 5 Kohlenstoffatomen, beispielsweise das Propionat- oder das Butyratsalz. Anstelle von NH₃ können auch die entsprechenden Komplexsalze mit Ethylendiamin oder Ethanolamin als Ligand eingesetzt werden.

Es können auch die Pd- bzw. Pt-Nitrit-Vorläuferverbindungen bevorzugt sein. Bevorzugte Pd- bzw. Pt-Nitrit-Vorläuferverbindungen sind beispielsweise solche, die mittels Lösen von Pd(OAc)₂ bzw. Pt(OAc)₂ in einer NaNO₂- oder KNO₂-Lösung erhalten werden.

Sofern der Katalysator Pd enthält ist es besonders bevorzugt, wenn die Pd- oder Pt-haltigen Vorläuferverbindungen keine schwefelhaltigen Anionen enthalten. Für Katalysatoren, die nur Pt enthalten, ist auch die Verwendung schwefelhaltiger Vorläuferverbindungen (z.B. Pt-Sulfit) möglich.

Eine Lösung zum Aufbringen der Vorläuferverbindungen auf den Trägerkörper zur Herstellung des Katalysators enthält vorzugsweise sowohl eine Pd- als auch eine Pt-Vorläuferverbindung. So können beispielsweise getrennte Lösungen hergestellt werden, indem zunächst eine Pd-haltige Vorläuferverbindungslösung und eine Pt-haltige Vorläuferverbindungslösung hergestellt werden. Diese beiden Lösungen können dann zu einer Lösung vereint werden. In der beide Metallkomponenten enthaltenden Lösung aus Vorläuferverbindungen liegt die Pd-haltige Vorläuferverbindung vorzugsweise in einem Bereich von 0,01 bis 3 Gew.-% und die Pt-haltige Vorläuferverbindung vorzugsweise in einem Bereich von 0,01 bis 3 Gew.-% vor. Die Sollkonzentration der Imprägnierlösung an Edelmetall-Vorläuferverbindungen ergibt sich im Regelfall daraus, dass die auf dem beschichteten Trägerkörper abzuscheidende Edelmetallmenge in der vom mit Washcoat beschichteten Trägerkörper durch Vollsaugen aufgenommenen Flüssigkeitsmenge enthalten sein muss (Ausnahme: stark chemisorbierende Edelemetallprecusor wie Pt-Sulfit). Ferner kann es von Vorteil sein, die Imprägnierlösung anzusäuern oder durch Zugabe von Komplexbildnern zu stabilisieren, um eine Ausfällung von Edelmetalloxiden und -hydroxiden zu vermeiden.

Nach dem Auftragen der Lösung werden die Vorläuferverbindungen vorzugweise durch Trocknen des Lösungsmittels auf dem Trägerkörper abgeschieden. Das Trocknen erfolgt vorzugsweise entweder durch die Prozessluft im Fließbett - sofern dieses verwendet wird -, durch Stehenlassen an der Luft oder in einem Trocknungsofen, vorzugsweise bei der gleichen Temperatur wie oben für die Trocknung nach dem Aufbringen der Zusammensetzung angegeben.

Nach dem Trocknen des imprägnierten Trägerkörpers wird dieser vorzugsweise anschließend zur Zersetzung der Metall-haltigen Vorläuferverbindungen kalziniert. Die Kalzinierung wird vorzugsweise bei denselben Temperaturen durchgeführt, wie die Kalzinierung des Trägerkörpers, auf den die Zusammensetzung aufgebracht wurde.

Die Kalzinierung kann unter Luft, Stickstoff-, ArgonAtmosphäre, oder unter (teilweiser) Reduktion der Metallkomponenten der Vorläuferverbindungen zu den elementaren Metallen unter Formiergas durchgeführt werden. Es ist bevorzugt, die Metalle während der Kalzinierung nicht zu den elementaren Metallen zu reduzieren, da nach dem Mars-van-Krevelen-Redoxmechanismus für eine ordnungsgemäße Funktion des Katalysators zur Oxidation von CO und Kohlenwasserstoffen Oxidationsstufen > 0 insbesondere bei Pd besonders vorteilhaft sind.

Die vorliegende Erfindung betrifft die Verwendung des Katalysators zur Entfernung von Kohlenmonoxid und Kohlenwasserstoffverbindungen aus Abgasströmen der Zementindustrie, d.h. der Katalysator wird als Abgasreinigungskatalysator für Abgasströme der Zementindustrie, welche Wasserdampf und mineralischen Staub enthalten, eingesetzt. Hierbei wird das Abgas der Zementindustrie, das CO und Kohlenwasserstoffverbindungen, Wasserdampf und mineralischen Staub enthält, vorzugsweise bei Temperaturen im Bereich von 130 bis 550 °C über bzw. durch den Katalysator geführt. Auf diese Weise werden das Kohlenmonoxid und die Kohlenwasserstoffverbindungen zu Kohlendioxid oxidiert. Hierbei wird dem Abgasstrom vorzugsweise Luft zugeführt, wobei die Menge des zugeführten Sauerstoffs im Mittel gleich oder größer dem stöchiometrischen Bedarf zur Oxidation des im zu reinigenden Abgas enthaltenen Kohlenmonoxid und der enthaltenen Kohlenwasserstoffverbindungen sein muss.
- Figur 1:: Figur 1 zeigt die Porenradienverteilung (gemessen mit N₂-Porosimetrie) für den Washcoat (Pd- bzw. Pt-haltige Oxidschicht) des in der Erfindung verwendeten Katalysators.
- Figur 2:: Figur 2 zeigt die Porenradienverteilung (gemessen mit N₂-Porosimetrie) für den Washcoat des Vergleichskatalysators 1.
- Figur 3:: Figur 3 zeigt die Porenradienverteilung (gemessen mit Hg-Porosimetrie) für den Washcoat des Vergleichskatalysators 2.
- Figur 4:: Figur 4 zeigt den CO-Umsatz für den in der Erfindung verwendeten Katalysator und für die Vergleichskatalysatoren 1 und 2.

Die Erfindung wird nun anhand von Beispielen näher erläutert, die in keiner Weise als beschränkend für den Schutzumfang auszulegen sind.

### Beispiel 1: Herstellung eines in der Erfindung verwendeten Katalysators:

### Schritt I - Herstellung eines Washcoats

10 kg ammoniakalische kolloidale SiO₂-Suspension (Ludox AS40, Grace Davison) wurden mit 24 kg destilliertem Wasser verdünnt. Anschließend wurden 30 kg einer Mischung aus 90 % TiO₂ und 10 % WO₃ (DT-52, Millenium Chemicals) zugegeben. Nach 10 Min. Rühren der Dispersion wurden ferner 0,75 kg 3-Glycid-oxy-propyltriethoxysilan (Geniosil GF82, Wacker Chemie) und 3,0 kg Dihydroxy-bis-ammonium-lactato-titan (TYZOR LA, Lehmann & Voss & Co. KG) als Binder zugegeben. Nach weiteren 10 Min. Rühren wurde die Mischung in einer Zahnkolloid-Mühle durchgemahlen.

### Schritt II - Beschichtung einer Katalysatorwabe mit dem Washcoat

Der in Schritt I erhaltene Washcoat wurde aufgerührt, bis kein Bodensatz mehr vorhanden war. Anschließend wurde eine Cordierit-Wabe in den Washcoat getaucht und wieder entnommen. Nach dem Abtropfen wurde die Wabe mit einer Druckluftpistole von beiden Seiten ausgeblasen. Die Wabe wurde anschließend bei 120 °C für 2 h getrocknet und bei 550 °C für 3 h kalziniert.

### Schritt III - Edelmetallimprägnierung

Die Wabe aus Schritt II wurde in eine salpetersaure Lösung von Platinnitrat und Palladiumnitrat getaucht. Anschließend wurde wie in Schritt II ausgeblasen, bei 120 °C für 2 h getrocknet und bei 550 °C für 3 h kalziniert.

Die Edelmetallkonzentration der Lösung betrug: 1,05 Gew.-% Pt und 0,21 Gew.-% Pd.

### Beispiel 2: Herstellung des Vergleichskatalysators 1:

### Schritt I - Herstellung eines Washcoats

Zunächst wurden 49,5 kg Wasser und 1,28 kg Essigsäure vorgelegt, in die zunächst 10 kg Al₂O₃ (SCFa140, Sasol), 6 kg TiO₂ (P25, Degussa) und 34 kg TiO₂ (DT-51, Millenium Chemicals) eingerührt wurden. Nach 1 Stunde Rühren wurde die Mischung in einer Zahnkolloid-Mühle durchgemahlen.

### Schritt II - Beschichtung einer Katalysatorwabe mit dem Washcoat

Der in Schritt I erhaltene Washcoat wurde aufgerührt, bis kein Bodensatz mehr vorhanden war. Anschließend wurde eine Cordierit-Wabe in den Washcoat getaucht und wieder entnommen. Nach dem Abtropfen wurde die Wabe mit einer Druckluftpistole von beiden Seiten ausgeblasen. Die Wabe wurde anschießend bei 120 °C für 2 h getrocknet und bei 550 °C für 3 h kalziniert.

### Schritt III - Edelmetallimprägnierung

Die Wabe aus Schritt II wurde in eine salpetersaure Lösung von Platinnitrat und Palladiumnitrat getaucht. Anschließend wurde wie in Schritt II ausgeblasen, bei 120 °C für 2 h getrocknet und bei 550 °C für 3 h kalziniert.

Die Edelmetallkonzentration der Lösung betrug: 0,72 Gew.-% Pt und 0,14 Gew.-% Pd.

### Beispiel 3: Herstellung eines Vergleichskatalysators 2:

Hier wurde eine Cordierit-Wabe mit 50 g/l eines kommerziellen Al₂O₃-CeO₂-Y₂O₃-La₂O₃-Washcoats (in Analogie zum EnviCat 50300 der Fa. Süd-Chemie") beschichtet. Die Edelmetalldotierung erfolgte analog wie bei dem Vergleichskatalysator 1 beschrieben.

Die Edelmetallkonzentration der Lösung betrug: 0,33 Gew.-% Pt und 1,31 Gew.-% Pd.

Der in dieser Erfindung verwendete Katalysator und die Vergleichskatalysatoren 1 und 2 wiesen die folgenden in der Tabelle 1 gezeigten Pt- bzw. Pd-Gehalte auf:

**Tabelle 1:**

| | In dieser Erfindung verwendete Katalysator | Vergleichskatalysator 1 | Vergleichskatalysator 2 |
|---|---|---|---|
| Pt [g/l] | 1,26 | 0,66 | 0,32 |
| Pd [g/l] | 0,25 | 0,13 | 1,32 |

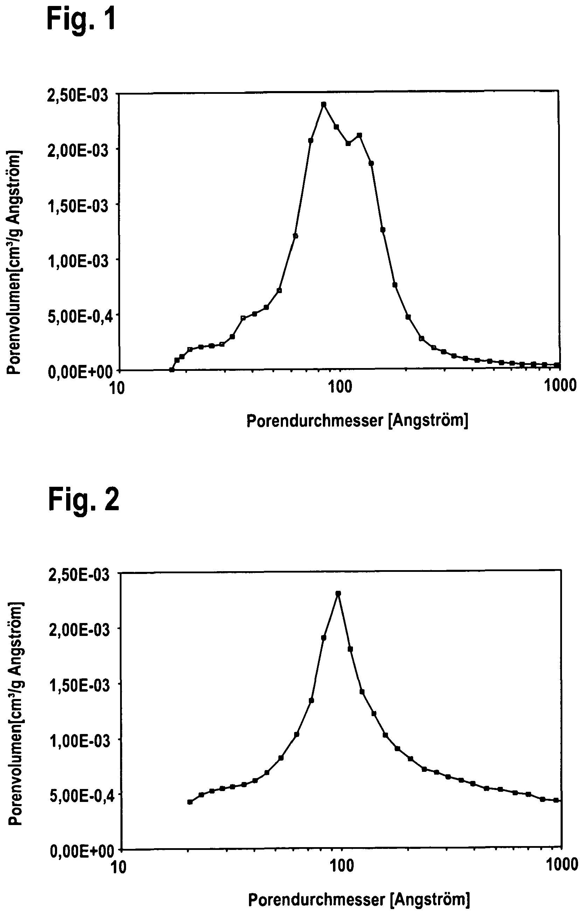

Ein weiteres typisches Merkmal des Katalysators ist die bimodale Porenradienverteilung (Messung mit Hg-Porosimetrie gemäß DIN 66133 bei einem maximalen Druck von 2.000 bar). Wie aus Figur 1 hervorgeht, findet man beim Katalysator im Bereich der Mesoporen ein Maximum bei 7 bis 8 nm und im Bereich der Transportporen bei 70 bis 80 nm. Bei dem Vergleichskatalysator 2 wurden hingegen Maxima bei 3 bis 4 nm und 1 µm gemessen, sodass zu erwarten ist, dass es bei diesem Muster zu einer starken Porenkondensation von Wasser kommt.

Sowohl der Katalysator als auch die Vergleichskatalysatoren 1 und 2 wurden im Bypass der Abgasreinigung eines Zementwerkes getestet. Das aufzureinigende Abgas hatte hierbei die in der folgenden Tabelle 2 angegebene Zusammensetzung (Rest zu 100 Vol.-% ist N₂). Der Staubgehalt betrug hierbei typischerweise 3 mg/Nm³, hauptsächlich bestehend aus Gips, Kalziumsilikaten, Eisen- und Aluminiumverbindungen, sowie Alkali- und Erdalkalisalzen. Er enthält dabei charakteristischerweise zwei Partikelfraktionen, eine feinkörnige mit Durchmessern von 0,7 bis 1,0 µm und eine etwas gröbere mit Durchmessern um 10 bis 20 µm.

**Tabelle 2:**

| Komponente | Mittelwert | Minimum | Maximum |
|---|---|---|---|
| O₂ [Vol.-%] | 6,8 | 6,0 | 7,5 |
| CO₂ [Vol. -%] | 20,4 | - | 22,1 |
| H₂O [Vol.-%] | 18,5 | - | 21,3 |
| CO [ppmv] | 1220 | 440 | 5850 |
| NOx [ppmv] | 300 | 195 | 450 |
| NH₃ [ppmv] | 210 | 120 | 390 |
| SO₂ [ppmv] | 150 | 60 | 550 |
| Gesamtvolumenstrom über Katalysator [Nm³/h] | 1600 | 1460 | 2280 |
| GHSV [h⁻¹] | 53000 | 48000 | 75000 |

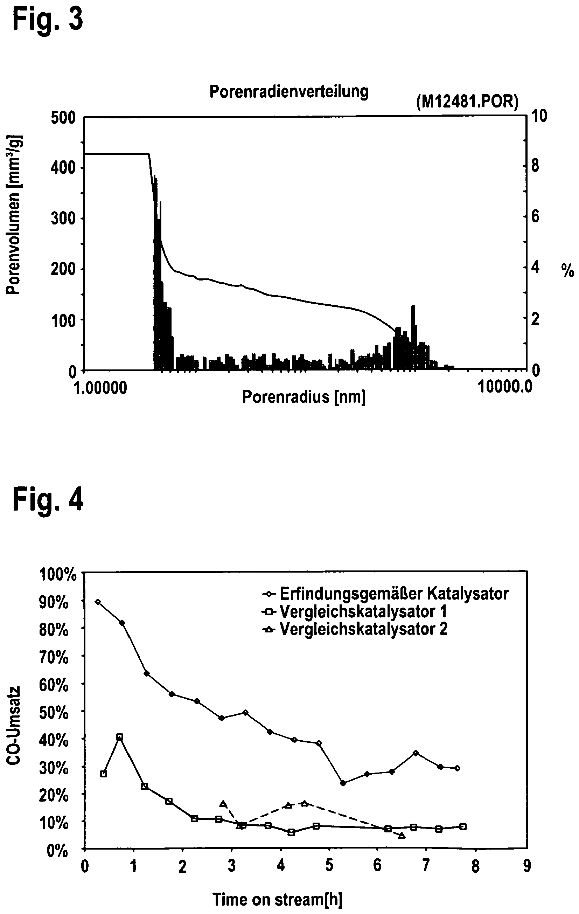

Wie aus den Figur 4 und der Tabelle 3 hervorgeht, ist der CO-Umsatz des Katalysators auch nach längerer Einsatzzeit auf einem konstant hohen Performance-Niveau. Damit ist klar, dass der Katalysator den Einsatzbedingungen, bzw. der Anwesenheit von Wasser und Feinstaub, besser widerstehen kann.

**Tabelle 3:**

| Erfindungsgemäßer Katalysator | | | Vergleichskatalysator 1 | | | Vergleichskatalysator 2 | | |
|---|---|---|---|---|---|---|---|---|
| Time on stream [h] | Katalysatortemperatur [°C] | CO-Umsatz | Time on stream [h] | Katalysatortemperatur [°C] | CO-Umsatz | Time on stream [h] | Katalysatortemperatur [°C] | CO-Umsatz |
| 0,27 | 243 | 89,99% | 0,39 | 227 | 27,49% | | | |
| 0,77 | 254 | 82,32% | 0,72 | 240 | 40,88% | | | |
| 1,27 | 253 | 63,97% | 1,22 | 245 | 22,93% | | | |
| 1,77 | 252 | 56,43% | 1,73 | 247 | 17,24% | | | |
| 2,27 | 252 | 53,71% | 2,23 | 246 | 10,75% | 2,82 | 254 | 16,51% |
| 2,77 | 251 | 47,52% | 2,73 | 240 | 10,55% | | | |
| 3,27 | 251 | 49,44% | 3,22 | 238 | 8,39% | 3,16 | 252 | 8,17% |
| 3,77 | 251 | 42,49% | 3,72 | 238 | 8,14% | | | |
| 4,27 | 251 | 39,52% | 4,21 | 238 | 5,73% | 4,16 | 251 | 15,75% |
| 4,77 | 251 | 38,21% | 4,72 | 236 | 7,99% | 4,49 | 248 | 16,52% |
| 5,28 | 251 | 23,68% | | | | | | |
| 5,77 | 251 | 26,87% | | | | | | |
| 6,27 | 251 | 27,92% | 6,21 | 235 | 7,01% | 6,49 | 251 | 4,61% |
| 6,77 | 251 | 34,78% | 6,72 | 235 | 7,54% | | | |
| 7,27 | 251 | 29,71% | 7,25 | 236 | 6,97% | | | |
| 7,61 | 251 | 29,36% | 7,72 | 236 | 8,02% | | | |

Die vorliegende Erfindung betrifft die Verwendung eines Katalysators umfassend Pd und/oder Pt und Oxide des Si, Ti und W, worin der Katalysator entweder in Form eines Extrudats aus Oxiden des Si, Ti und W vorliegt, das mit Pd und/oder Pt imprägniert ist, oder in Form eines geträgerten Katalysators vorliegt, bei dem auf einen Trägerkörper eine Schicht aufgebracht ist, die das Pd und/oder Pt und die Oxide des Si, Ti und W umfasst, zur Entfernung von Kohlenmonoxid (CO) und Kohlenwasserstoffen aus Abgasströmen der Zementindustrie welche Wasserdampf und mineralischen Staub enthalten.

## Patentansprüche

1. Verwendung eines Katalysators umfassend Pd und/oder Pt und Oxide des Si, Ti und W, worin der Katalysator entweder in Form eines Extrudats aus Oxiden des Si, Ti und W vorliegt, das mit Pd und/oder Pt imprägniert ist, oder in Form eines geträgerten Katalysators vorliegt, bei dem auf einen Trägerkörper eine Schicht aufgebracht ist, die das Pd und/oder Pt und die Oxide des Si, Ti und W umfasst, zur Entfernung von Kohlenmonoxid (CO) und Kohlenwasserstoffen aus Abgasströmen der Zementindustrie, welche Wasserdampf und mineralischen Staub enthalten.

2. Verwendung nach Anspruch 1, worin, wenn der Katalysator in Form eines Extrudats vorliegt, der Anteil an Pd und/oder Pt im Bereich von 0,01 bis 10 Gew.-% liegt, bezogen auf das Gesamtgewicht des Katalysators.

3. Verwendung nach Anspruch 1, worin, wenn der Katalysator in Form eines geträgerten Katalysators vorliegt, der Anteil an Pd und/oder Pt im Bereich von 0,01 bis 20 Gew.-% liegt, bezogen auf die Gesamtmasse der Schicht.

4. Verwendung nach einem der Ansprüche 1 bis 3, worin der Anteil an Ti, bezogen auf TiO₂, im Bereich von 70 bis 95 Gew.-% liegt, bezogen auf das Gewicht der Oxide des Si, Ti und W.

5. Verwendung nach einem der Ansprüche 1 bis 4, worin der Anteil an Si, bezogen auf SiO₂, im Bereich von 4 bis 20 Gew.-% liegt, bezogen auf das Gesamtgewicht der Oxide des Si, Ti und W.

## Claims

1. Use of a catalyst comprising Pd and/or Pt and oxides of Si, Ti and W, wherein the catalyst is either present in the form of an extrudate composed of oxides of Si, Ti and W which is impregnated with Pd and/or Pt or is present in the form of a supported catalyst in which a layer comprising the Pd and/or Pt and the oxides of Si, Ti and W has been applied to a support body, for removing carbon monoxide (CO) and hydrocarbons from offgas streams of the cement industry which contain water vapour and mineral dust.

2. Use according to Claim 1, wherein, when the catalyst is present in the form of an extrudate, the proportion of Pd and/or Pt is in the range from 0.01 to 10% by weight, based on the total weight of the catalyst.

3. Use according to Claim 1, wherein, when the catalyst is present in the form of a supported catalyst, the proportion of Pd and/or Pt is in the range from 0.01 to 20% by weight, based on the total mass of the layer.

4. Use according to any of Claims 1 to 3, wherein the proportion of Ti, based on TiO₂, is in the range from 70 to 95% by weight, based on the weight of the oxides of Si, Ti and W.

5. Use according to any of Claims 1 to 4, wherein the proportion of Si, based on SiO₂, is in the range from 4 to 20% by weight, based on the total weight of the oxides of Si, Ti and W.

## Revendications

1. Utilisation d'un catalyseur comprenant du Pd et/ou du Pt et des oxydes du Si, du Ti et du W, dans laquelle le catalyseur se trouve soit sous forme d'un produit extrudé d'oxydes du Si, du Ti et du W, qui est imprégné de Pd et/ou de Pt, soit sous forme d'un catalyseur supporté, dans lequel une couche, qui comprend du Pd et/ou du Pt et les oxydes du Si, du Ti et du W, est appliquée sur un corps support, pour éliminer le monoxyde de carbone (CO) et les hydrocarbures d'effluents gazeux de l'industrie du ciment, qui contiennent de la vapeur d'eau et de la poussière minérale.

2. Utilisation selon la revendication 1, dans laquelle, lorsque le catalyseur se trouve sous forme d'un produit extrudé, la proportion de Pd et/ou de Pt se situe dans la plage de 0,01 à 10% en poids, par rapport au poids total du catalyseur.

3. Utilisation selon la revendication 1, dans laquelle, lorsque le catalyseur se trouve sous forme d'un catalyseur supporté, la proportion de Pd et/ou de Pt se situe dans la plage de 0,01 à 20% en poids, par rapport à la masse totale de la couche.

4. Utilisation selon l'une quelconque des revendications 1 à 3, dans laquelle la proportion de Ti, se rapportant à TiO₂, se situe dans la plage de 70 à 95% en poids, par rapport au poids des oxydes de Si, de Ti et de W.

5. Utilisation selon l'une quelconque des revendications 1 à 4, dans laquelle la proportion de Si, se rapportant à SiO₂, se situe dans la plage de 4 à 20% en poids, par rapport au poids total des oxydes de Si, de Ti et de W.
